# EUROPÄISCHE PATENTSCHRIFT

(11) **EP 3 132 671 B1**
(45) Veröffentlichungstag und Bekanntmachung des Hinweises auf die Patenterteilung: **19.09.2018**
(21) Anmeldenummer: 16182761.3
(22) Anmeldetag: 04.08.2016
(51) Int. Cl.: A01F 15/00

(54) **BAUSATZ ZUM UMBAU EINER TANDEMANORDNUNG IN EINE EINZELRADANORDNUNG FÜR EIN GEZOGENES LANDWIRTSCHAFTLICHES GERÄT UND GEZOGENES LANDWIRTSCHAFTLICHES GERÄT MIT EINEM SOLCHEN**
CONSTRUCTION SET FOR CONVERTING A TANDEM ASSEMBLY TO AN INDEPENDENT WHEEL ASSEMBLY FOR A TOWED AGRICULTURAL IMPLEMENT AND A TOWED AGRICULTURAL IMPLEMENT WITH SAME
KIT DESTINÉ À TRANSFORMER UN SYSTÈME TANDEM EN UN SYSTÈME À UNE ROUE INDIVIDUELLE POUR UN APPAREIL AGRICOLE TRACTÉ ET APPAREIL AGRICOLE TRACTÉ LE COMPRENANT

(30) Priorität: 21.08.2015 DE 102015216063
(43) Veröffentlichungstag der Anmeldung: 22.02.2017
(73) Patentinhaber: Deere & Company, Moline, IL 61265 (US)
(72) Erfinder: Guerin, Sebastien, 25000 Besancon (FR); Chapon, Emmanuel, 70100 Velet (FR); Guiet, Lionel, 70100 Gray (FR)
(74) Vertreter: Reichert, Christian

(56) Entgegenhaltungen:
- EP-A1- 2 220 929
- GB-A- 2 083 790

## Beschreibung

Die Erfindung betrifft einen Bausatz zum Umbau einer Tandemanordnung in eine Einzelradanordnung für ein gezogenes landwirtschaftliches Gerät. Ferner wird ein gezogenes landwirtschaftliches Gerät, geeignet zum wahlweisen Betreiben in einer Tandemanordnung oder einer Einzelradanordnung mit einem solchen Bausatz offenbart.

Gezogene landwirtschaftliche Geräte, beispielsweise Erntebergungsmaschinen, wie Ballenpressen, oder Pflanz- bzw. Sämaschinen, Bodenbearbeitungsmaschinen, Feldspritzen oder auch Anhänger und Wagons zum Transportieren von landwirtschaftlichen Produkten sind bekannt. Ferner ist es bekannt, derartige Geräte mit einer Tandemanordnung für eine beidseitig eines Geräterahmens zweirädrige Bereifung auszurüsten, wobei jeweils zwei Räder an einem pendelnd gelagerten Tandemachsenträger, der an einer mit dem Geräterahmen verbundenen Tragachse pendelnd aufgehängt ist, gelagert sind. Der Geräterahmen ist dabei in der Regel auf eine derartige Tandemanordnung konstruktiv ausgelegt und verfügt über entsprechende Festigkeiten und Verformungsstabilitäten, die aufgrund höherer Traglasten in der Regel höher ausgelegt sind, als bei einem Gerät mit Einzelradanordnung, an dem beidseitig des Geräterahmens jeweils nur ein Rad an einer Einzelradtragachse angeordnet ist. Hersteller von landwirtschaftlichen gezogenen Geräten bieten entweder Geräte mit Tandemanordnung und einem entsprechend auf eine Tandemanordnung ausgelegten Geräterahmen, oder Geräte mit Einzelradanordnung und einem entsprechend auf eine Einzelradanordnung ausgelegten Geräterahmen, an. Ein für beide Anordnungen geeigneter Geräterahmen ist daher in der Herstellung eher unrentabel, da ein für eine Tandemanordnung geeigneter Geräterahmen für eine Einzelradanordnung überdimensioniert und ein für eine Einzelradanordnung geeigneter Geräterahmen für eine Tandemanordnung unterdimensioniert wäre. Dies führt in der Regel auch dazu, dass sich Hersteller für eine der Anordnungen an einem Gerätetyp oder an einer Geräteserie entscheiden, um letztendlich auch fertigungsgünstig mit geringer Teilevariation produzieren zu können. Oftmals ist jedoch im Einsatz auf dem Feld ein Gerät für hohe Traglasten mit Tandemanordnung nicht zwingend notwendig bzw. ein Gerät für niedrigere Traglasten mit Einzelradanordnung nicht ausreichend. Es ist ferner ein Anliegen der Betreiber von landwirtschaftlichen Geräten, je nach Witterung und Bodenbeschaffenheit, den Bodenanpressdruck oder den Rollwiderstand des gezogenen Gerätes zu verringern, wobei eine Tandemanordnung gegenüber einer Einzelradanordnung einen geringeren Bodenanpressdruck erzeugt, dafür jedoch eine Einzelradaufhängung gegenüber einer Tandemanordnung einen geringeren Rollwiderstand. Um sich die Option einer Tandemanordnung oder einer Einzelradanordnung für den Einsatz auf dem Feld offen zu halten, muss der Betreiber daher zwei Geräte anschaffen, was in der Regel mit höheren Kosten verbunden ist. Im Zweifel ist er dabei auch gezwungen den Anbieter bzw. Hersteller zu wechseln, was nachteilige finanzielle oder auch qualitative Nachteile für den Betreiber mit sich bringen kann.

Die der Erfindung zugrunde liegende Aufgabe wird darin gesehen, einen Adapter für ein gezogenes landwirtschaftliches Gerät der eingangs genannten Art vorzuschlagen, durch die die oben genannten Probleme behoben werden können.

Die Aufgabe wird erfindungsgemäß durch die Lehre der Patentansprüche 1 und 2 gelöst.

Erfindungsgemäß umfasst ein Bausatz der eingangs genannten Art einen Adapter mit Anbauflansch und darin ausgebildete Befestigungsbohrungen, zum Anbau des Anbauflansches an einen Geräterahmen eines gezogenen landwirtschaftliches Geräts, einer am Anbauflansch ausgebildeten Tragachsenaufnahme, einer am Anbauflansch angeordneten Einzelradachse und einem an der Einzelradachse angeordneten Radflansch, zum Anbau einer Radfelge. Ein Betreiber hat damit die Möglichkeit, ein mit einer Tandemanordnung ausgerüstetes landwirtschaftliches Gerät durch Abbau eines Tandemachsenträgers und Anbau des Adapters in ein Gerät mit Einzelradanordnung umzubauen, ohne weitere konstruktive Veränderungen vorzunehmen, insbesondere am Geräterahmen, der sowohl für die eine als auch für die andere Anordnung unverändert bleibt. Damit wird dem Betreiber die Option geboten mit nur einem Gerät wahlweise und nach Bedarf und Wunsch das Gerät in Tandemanordnung oder in Einzelradanordnung zu betrieben. Dem Hersteller wird dadurch möglich, nur einen Geräterahmentyp in eine Fertigungslinie aufzunehmen, jedoch beide Varianten von Radanordnungen an einem Gerätetyp bzw. einer Geräteserie anzubieten. Der Adapter mit Anbauflansch greift an der Tragachse des Geräterahmens an, wo fertigungsseitig der Tandemachsenträger pendelnd befestigt ist, wodurch eine Umbaumaßnahme minimiert wird. Dazu ist vorzugsweise auf der Rückseite des Anbauflansches eine Tragachsenaufnahme, beispielsweise in Form einer Bohrung oder einer zu einem Tragachsenende der Tragachse komplimentären Passung oder Öffnung vorgesehen, in der die Tragachse des Geräterahmens aufgenommen wird, bzw. die auf das Tragachsenende gestülpt bzw. geschoben wird. Über Gewindebolzen, die durch am Anbauflansch ausgebildete Durchgangsbohrungen geführt werden, und entsprechende am Geräterahmen vorgesehene bzw. ausgebildete Gewindebohrungen wird der Adapter montagefreundlich an den Geräterahmen geschraubt, wobei das Aufnehmen der Tragachsen in der Tragachsenaufnahme zugleich eine passgenaue Positionierung für den Anbauflansch, eine konstruktive Stabilität und eine geeignete Montagehilfe bietet. Durch eine zentrierte Anordnung der Tragachsenaufnahme kann ferner eine fertigungsfreundliche rotationssymmetrische Form für den Anbauflansch gewählt werden. Hier sind allerdings auch andere Formen denkbar, da der Anbauflansch nicht zwingend rotationssymmetrisch ausgebildet sein muss. Bei einer Tragachse, die in Bezug auf die an einem Tandemträger angeordneten Radachsen auf in etwa gleicher Höhe liegt, ist eine zentrierte Tragachsenaufnahme mit dazu zentriert ausgerichteter Radachse am Anbauflansch von Vorteil, da so bei der Einzelradanordnung das Einzelrad auf gleicher Höhe liegt wie bei der Tandemanordnung die jeweiligen Räder. Damit könnten dieselben Räder für beide Anordnungen verwendet werden. Ferner ist bei gleichen Höheneinstellungen für beide Anordnungen gewährleistet, dass das Gerät mit gleichbleibendem Bodenabstand beim Umbau von einer Anordnung zur anderen betrieben werden kann. Dies kann sich bedeutend erweisen, wenn bodeneingreifende Werkzeuge oder Vorrichtungen am Gerät eingestellt wurden, beispielsweise eine Erntegutaufnahmeeinrichtung einer Ballenpresse, das Spritzgestänge einer Feldspritze, oder Bodeneingriffswerkzeuge eines Pflanz-, Sä- oder Bodenbearbeitungsgeräts. Sollte demnach die gleiche Höhe der Räder beim Umbau eingehalten werden und nimmt bei einer Tandemanordnung die Tragachse in Bezug auf die an dem Tandemträger angeordneten Radachsen eine abweichende Höhe ein, kann die am Anbauflansch angeordnete Tragachsenaufnahme sowohl zum Anbauflansch und/oder zur Radachse entsprechend außermittig angeordnet sein. Alternativ können unterschiedliche Höhenmaße durch entsprechend unterschiedliche Rädergrößen kompensiert werden. Der am Adapter bzw. an der Radachse angeordnete Radflansch kann montagefreundlich in den gleichen Abmessungen ausgebildet sein wie an den Radachsen des Tandemträgers ausgebildete Radflansche, so dass die Felgengröße und Felgenart kompatibel ist.

Durch den oben beschriebenen Bausatz in Verbindung mit einem gezogenen landwirtschaftlichen Gerät mit Tandemanordnung kann das Gerät derart ausgebildet werden, dass es für den wahlweisen Betrieb einer Tandemanordnung oder einer Einzelradanordnung geeignet ist, wobei an einem Geräterahmen des Geräts beidseitig zum wahlweisen Anbau eines Tandemachsenträgers oder eines oben beschriebenen Adapters Tragachsen ausgebildet sind, wobei wahlweise ein Tandemachsenträger oder der Adapter beidseitig, jeweils die Tragachse aufnehmend, an den Geräterahmen des gezogenen landwirtschaftliches Geräts anbaubar ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
Fig. 1 eine schematische perspektivische Vorderseitenansicht eines Bausatzes zum Umbau einer Tandemanordnung in eine Einzelradanordnung für ein gezogenes landwirtschaftliches Gerät,
Fig.3 eine schematische perspektivische Seitenansicht eines gezogenen landwirtschaftlichen Geräts mit Rädern in einer Tandemanordnung,
Fig.4 eine schematische perspektivische Seitenansicht des gezogenen landwirtschaftlichen Geräts aus Figur 3 mit von einem Tandemachsenträger abmontierten Rädern,
Fig.5 eine schematische perspektivische Seitenansicht des gezogenen landwirtschaftlichen Geräts gemäß Figur 4 mit von einer Tragachse abmontiertem Tandemachsenträger,
Fig.6 eine schematische perspektivische Seitenansicht des gezogenen landwirtschaftlichen Geräts gemäß Figur 5 mit an die Tragachse montierbarem Bausatz aus den Figuren 1 und 2 und
Fig. 7 eine schematische perspektivische Seitenansicht des gezogenen landwirtschaftlichen Geräts aus den Figuren 3 bis 6 in einer Einzelradanordnung mit einem montierten Rad.

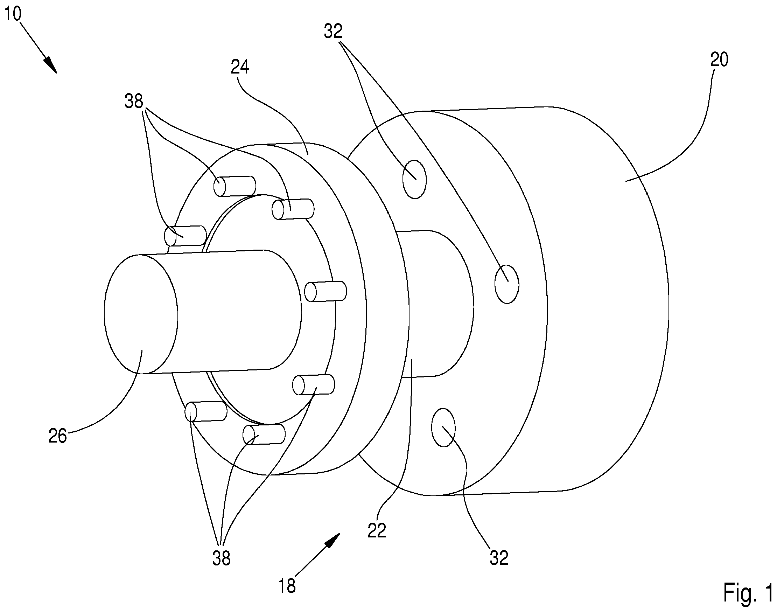

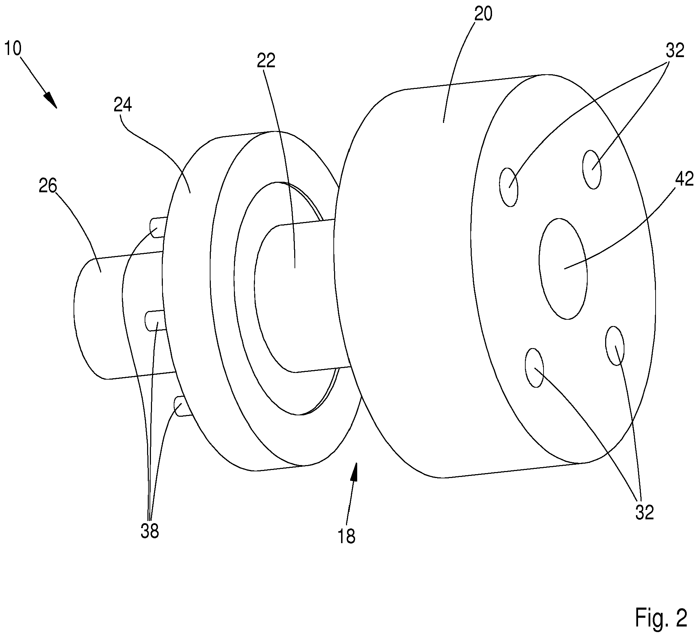

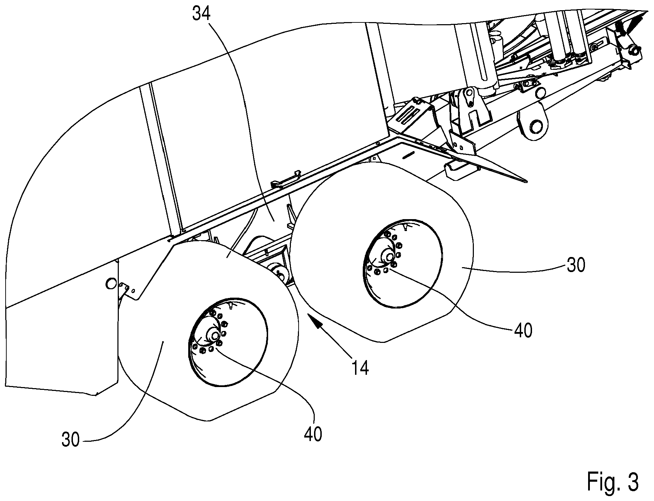

Ein in der Figur 1 und 2 schematisch dargestellter Bausatz 10 zum Umbau eines gezogenen landwirtschaftlichen Geräts 12 (siehe Figuren 3 bis 7) mit Tandemanordnung 14 in eine Einzelradanordnung 16 umfasst einen Adapter 18 mit einem zylindrischen Anbauflansch 20, eine am Anbauflansch 20 befestigte Radachse 22, einem an der Radachse gelagerten Radflansch 24 und eine am Radflansch 24 auf einer Vorderseite des Adapters 18 ausgebildete Radnabe 26 zur Aufnahme einer Radfelge 28 eines Rades 30.

Der Anbauflansch 20 umfasst durchgängige über seinen Umfang angeordnete Befestigungsbohrungen 32, mit denen der Anbauflansch 20 mittels Gewindebolzen (nicht gezeigt) an einen Geräterahmen 34 des landwirtschaftlichen Gerätes 12 in am Geräterahmen 34 vorgesehene Gewindebohrungen 36 montierbar bzw. anbaubar ist. Auf der Vorderseite des Adapters 18 erstrecken sich ausgehend vom Radflansch 24 Gewindebolzen 38 zur Befestigung einer Radfelge 40.

Auf der Rückseite des Adapters 18 (siehe Figur 2) ist der Anbauflansch 20 mit einer zentrischen Aufnahme 42 bzw. Ausnehmung oder Bohrung zur Aufnahme einer beidseitig des Geräterahmens 34 angeordneten Tragachse 44 ausgebildet. Die Tragachse 44 ist in der Tandemanordnung 14 mit einem Tandemachsenträger 46 bestückt, wobei der Tandemachsenträger 46 mittig pendelnd an der Tragachse 44 aufgehängt ist. Seitlich des Tandemachsenträgers 46 erstrecken sich im gleichen Abstand zur Mitte des Tandemachsenträgers 46 zwei Radachsen 48, an die die Räder 30 in der Tandemanordnung 14 montiert sind (siehe Figur 3).

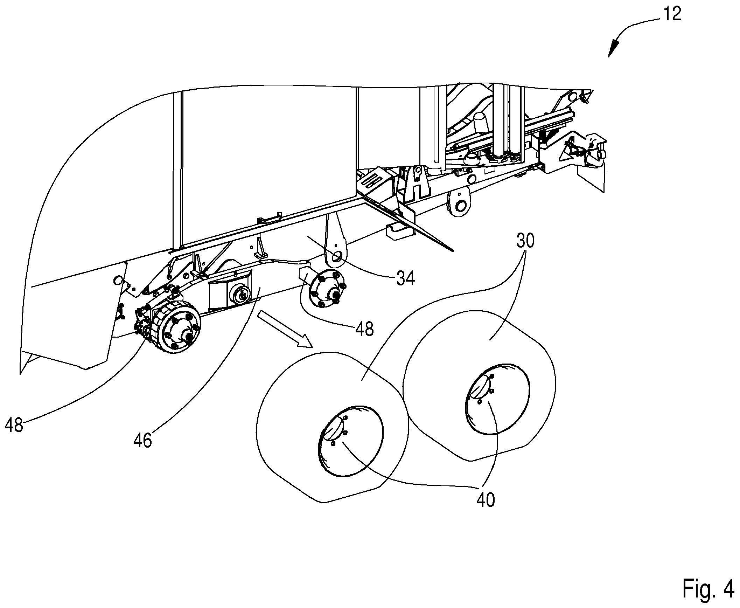

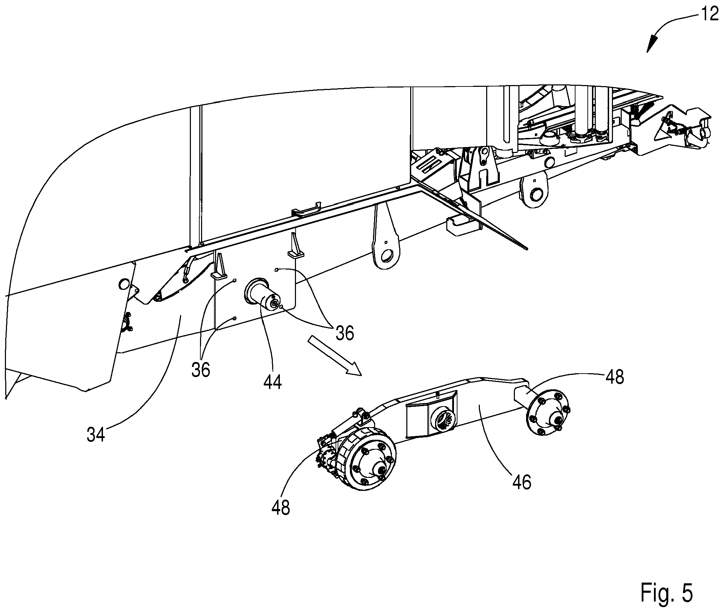

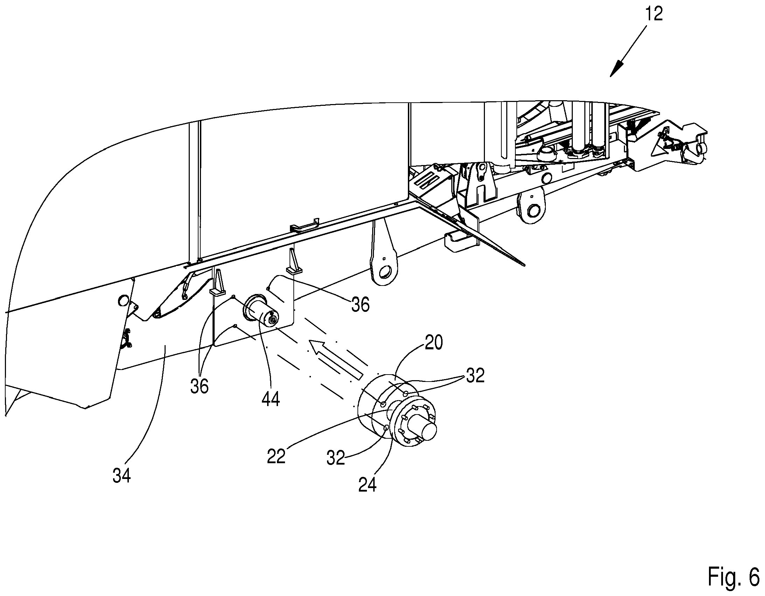

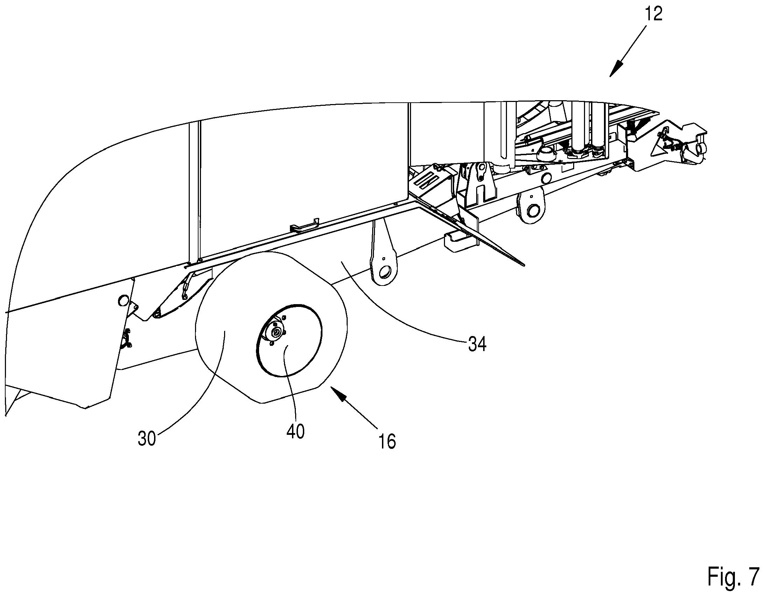

Für einen Umbau des landwirtschaftlichen Geräts in Tandemanordnung 14 in die Einzelradanordnung 16 werden, wie in den Figuren 4 bis 7 abgebildet, zunächst die Räder 30 von den Radachsen 48 abmontiert (Figur 4) und der Tandemachsträger 46 von der Tragachse 44 demontiert (Figur 5). Es folgt der Anbau des Adapters 18 aus dem Bausatz 10 (Figur 6), wobei der Adapter 18 mit seiner auf der Rückseite ausgebildeten Tragachsenaufnahme 42 auf das Ende der Tragachse 44 geschoben bzw. gesteckt und mittels der am Anbauflansch 20 ausgebildeten Befestigungsbohrungen 32 und Gewindebolzen (nicht gezeigt) an die am Geräterahmen vorgesehenen Gewindebohrungen 36 geschraubt wird. Sodann wird eines der vorher abmontierten Räder, oder ein Ersatzrad (nicht geziegt) auf den Radflansch 24 des Adapters 18 gesteckt und an den Gewindebolzen 38 mittels dafür vorgesehene Schraubmuttern (nicht gezeigt) befestigt (Figur 7). Der hiermit abgeschlossene Umbau der Tandemanordnung 14 in die Einzelradanordnung 16 wird auf einer gegenüberliegenden Seite des landwirtschaftlichen Geräts in gleicher Weise wiederholt. Ein Umbau aus der Einzelradanordnung 16 in die Tandemanordnung 14 erfolgt in entsprechend umgekehrter Weise an beiden Seiten des landwirtschaftlichen Geräts 10.

Exemplarisch wurde hier ein gezogenes landwirtschaftliches Gerät 10 in Form einer Rundballenpresse mit Wickler (Kombipresse) dargestellt. Der oben beschriebene Umbau einer Tandemanordnung 14 in eine Einzelradanordnung 16 kann jedoch an jedem beliebigen gezogenen landwirtschaftlichen Gerät erfolgen, beispielsweise an einer einfachen Rundballenpresse, einer Großballenpresse, einer gezogenen Feldspritze, einem Pflanzgerät, einem Sägerät, einem Bodenbearbeitungsgerät, einem Entladewagen, einem Anhänger und an anderen landwirtschaftlichen Geräten.

## Patentansprüche

1. Bausatz (10) zum Umbau einer Tandemanordnung (14) in eine Einzelradanordnung (16) für ein gezogenes landwirtschaftliches Gerät (12), **gekennzeichnet durch** einen Adapter (18) mit einem Anbauflansch (20) und darin ausgebildete Befestigungsbohrungen (32), zum Anbau des Anbauflansches (20) an einen Geräterahmen (34) eines gezogenen landwirtschaftliches Geräts (12), einer am Anbauflansch (20) ausgebildeten Tragachsenaufnahme (42), einer am Anbauflansch (20) angeordneten Einzelradachse (22) und einem an der Einzelradachse (22) angeordneten Radflansch (24), zum Anbau einer Radfelge (40).

2. Gezogenes landwirtschaftliches Gerät (12), zum wahlweisen Betreiben in einer Tandemanordnung (14) oder einer Einzelradanordnung (16), mit einem Geräterahmen (34) und beidseitig des Geräterahmens (34) ausgebildeten Tragachsen (44), zum wahlweisen Verwenden eines Tandemachsenträgers (46) oder eines Bausatzes (10) nach Anspruch 1, wobei wahlweise ein Tandemachsenträger (46) oder der Adapter (18) beidseitig, jeweils die Tragachse (44) aufnehmend, an den Geräterahmen (34) des gezogenen landwirtschaftliches Geräts (12) anbaubar ist.

## Claims

1. Kit (10) for converting a tandem arrangement (14) into an individual wheel arrangement (16) for a towed agricultural implement (12), **characterized by** an adapter (18) with a mounting flange (20) and fastening bores (32) formed therein, for the mounting of the mounting flange (20) onto an implement frame (34) of a towed agricultural implement (12), a supporting axle receptacle (42) formed on the mounting flange (20), an individual wheel axle (22) arranged on the mounting flange (20) and a wheel flange (24), which is arranged on the individual wheel axle (22), for the mounting of a wheel rim (40).

2. Towed agricultural implement (12), for optionally operating in a tandem arrangement (14) or an individual wheel arrangement (16), with an implement frame (34) and supporting axles (44) formed on both sides of the implement frame (34), for optionally using a tandem axle carrier (46) or a kit (10) according to claim 1, wherein in either a tandem axle carrier (46) or the adapter (18) can be mounted onto the implement frame (34) of the towed agricultural implement (12) on both sides, in each case receiving the supporting axle (44).

## Revendications

1. Kit (10) de conversion d'un système tandem (14) en un système à une roue (16) pour un engin agricole tracté (12), **caractérisé par** un adaptateur (18) avec une bride de montage (20) et des alésages de fixation (32) réalisés sur celle-ci, pour le montage de la bride de montage (20) sur un châssis d'engin (34) d'un engin agricole tracté (12), un logement d'essieu porteur (42) réalisé sur la bride de montage (20), un essieu à une roue (22) disposé sur la bride de montage (20) et une bride de roue (24) disposée sur l'essieu à une roue (22), pour le montage d'une jante de roue (40).

2. Engin agricole tracté (12), destiné à fonctionner de manière sélective dans un système en tandem (14) ou dans un système à une roue (16), comprenant un châssis d'engin (34) et des essieux porteurs (44) réalisés des deux côtés du châssis d'engin (34), pour l'utilisation sélective d'un support d'essieu tandem (46) ou d'un kit (10) selon la revendication 1, un support d'essieu tandem (46) ou l'adaptateur (18) pouvant être monté des deux côtés de manière sélective, à chaque fois en recevant l'essieu porteur (44), sur le châssis d'engin (34) de l'engin agricole tracté (12).
